Europäisches Patentamt

European Patent Office

Office européen des brevets

(19)

(11) EP 0 916 903 A2

(12) **EUROPÄISCHE PATENTANMELDUNG**

(43) Veröffentlichungstag:
19.05.1999 Patentblatt 1999/20

(51) Int. Cl.⁶: **F24D 19/10**

(21) Anmeldenummer: 98121483.6

(22) Anmeldetag: 12.11.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **12.11.1997 DE 19750091**

(71) Anmelder:
**PTG Planungsgemeinschaft für technische
Gebäudeausrüstung GmbH
49356 Diepholz (DE)**

(72) Erfinder:
• **Goldschmidt, Thomas
49356 Diepholz (DE)**
• **Kirchhoff, Friedrich Dipl.-Ing.
49457 Drebber (DE)**
• **Nordenbrock, Wilhelm
26169 Friesoythe/Thüle (DE)**

(74) Vertreter:
**Eisenführ, Speiser & Partner
Martinistrasse 24
28195 Bremen (DE)**

(54) **Raumheizungsanlage und Verfahren zum Betreiben derselben**

(57) Die Erfindung besteht in einem Verfahren zur Steuerung eines Wärmeerzeugers einer mit einem Wärmeübertragungsmedium arbeitenden Raumheizungsanlage, deren Wärmeübertragungsmedium eine Systemtemperatur, bei dem der Wärmeerzeuger zum Aufheizen des Wärmeübertragungsmediums für eine Einschaltperiode eingeschaltet wird, wenn die Systemtemperatur eine Einschalttemperatur unterschreitet und bei dem die Einschaltperiode durch Abschalten des Wärmeerzeugers beendet wird, sobald ein vorherberechnetes Abschaltereignis eintritt, und der Wärmeerzeuger nach Ablauf einer Ausschaltperiode $(t_A)$ wieder eingeschaltet wird, wenn die Einschalttemperatur erneut unterschritten wird und bei dem die Dauer $(t_p)$ von einem Einschalten des Wärmeerzeugers bis zum darauffolgenden Wiedereinschalten des Wärmeerzeugers gemessen und der so gewonnene Meßwert zur Bestimmung der Dauer mindestens einer folgenden Einschaltperiode verwendet wird.

Außerdem besteht die Erfindung in einer Raumheizungsanlage, die mindestens einen Heizkörper (24) aufweist, der an einen von einem Wärmeübertragungsmedium durchströmten Leitungskreislauf (18) mit einem Vorlaufzweig (16) und einem Rücklaufzweig (22) angeschlossen ist, sowie einen Wärmeerzeuger (10) der zum Erwärmen des Wärmeübertragungsmediums gestaltet ist, einen Meßfühler (36) zum Bestimmen einer Systemtemperatur der Raumheizungsanlage, einen Meßfühler (42) zum Bestimmen einer Außentemperatur, eine Zeiterfassungseinrichtung und eine mit den Meßfühlern (36, 42), der Zeiterfassungseinrichtung und dem Wärmeerzeuger (10) verbundene Datenverarbeitungseinrichtung (12) zum Steuern des erfindungsgemäßen Verfahrens.

Fig. 1

**Beschreibung**

Die Erfindung betrifft ein Verfahren zur Steuerung eines Wärmeerzeugers einer mit einem Wärmeübertragungsmedium arbeitenden Raumheizungsanlage, die eine Systemtemperatur besitzt, bei dem der Wärmeerzeuger zum Aufheizen des Wärmeübertragungsmediums für eine Einschaltperiode eingeschaltet wird, wenn die Systemtemperatur eine Einschalttemperatur unterschreitet, und bei dem die Einschaltperiode durch Abschalten des Wärmeerzeugers beendet wird, sobald ein vorherbestimmtes Abschaltereignis eintritt und der Wärmeerzeuger nach Ablauf einer Abschaltperiode wieder eingeschaltet wird, wenn die Einschalttemperatur erneut unterschritten wird. Die Erfindung betrifft außerdem eine Raumheizungsanlage sowie eine Datenverarbeitungsanlage, um das Verfahren durchzuführen.

Bekannte Raumheizungsanlagen dienen dazu, ein ganzes Gebäude oder auch nur einzelne Räume eines Gebäudes zu beheizen. Dies geschieht dadurch, daß sich in den zu beheizenden Räumen Heizkörper befinden, die von einem Wärmeübertragungsmedium wie beispielsweise Wasser durchströmt werden. Dabei gibt das Wärmeübertragungsmedium über die Heizkörper Wärme an den zu beheizenden Raum ab. Das Wärmeübertragungsmedium wird dazu in einem Wärmeerzeuger, beispielsweise einem mit einem Brenner ausgestatteten Heizkessel erwärmt. Es fließt in einem Leitungskreislauf, der den Wärmeerzeuger und den oder die Heizkörper miteinander verbindet. Der in den Wärmeerzeuger mündende Zweig des Leitungskreislaufes wird als Rücklaufzweig bezeichnet, während der aus der dem Wärmeerzeuger herausführende Zweig des Leitungskreislaufes als Vorlaufzweig bezeichnet wird. In einem dieser Zweige ist üblicherweise eine Umwälzpumpe angeordnet, die für die Zirkulation des von dem Wärmeerzeuger erwärmten Wärmeübertragungsmediums in der Raumheizungsanlage sorgt. Im Vorlaufzweig hat das Wärmeübertragungsmedium eine höhere Temperatur, als im Rücklaufzweig. Die Temperatur des Wärmemediums im Vorlauf- oder im Rücklaufzweig, oder eine diesen Temperaturen entsprechende Temperatur der Raumheizungsanlage wird hier als Systemtemperatur bezeichnet.

Es ist bekannt, eine solche Raumheizungsanlage mit einer Datenverarbeitungseinrichtung zu steuern, der verschiedenste Temperaturwerte, wie beispielsweise eine außerhalb der zu heizenden Räume herrschende Außentemperatur, eine Vorlauftemperatur, eine Rücklauftemperatur, eine Rauminnentemperatur, eine Wärmeerzeugertemperatur u.s.w. zugeführt werden. Aus den verschiedenen Temperaturwerten und weiteren Werten ermittelt die Datenverarbeitungseinrichtung je nach Programmierung Einschalt- oder Ausschaltzeiten eines Brenners, der dem Aufheizen des Wärmeübertragungsmediums in dem Wärmeerzeuger dient.

In der DE-PS 42 11 914 wird ein Verfahren zur Regelung einer Heizungsanlage mit einer Datenverarbeitungseinrichtung vorgeschlagen, bei dem durch einen Wärmeerzeuger, z. B. einen Heizkessel, ein Wärmeübertragungsmedium wie Wasser erwärmt wird, das ein Heizungssystem mit einer Vorlauftemperatur durchströmt und nach Abgabe von Wärme an die Räume eines Gebäudes und/oder einer Wohnung in Abhängigkeit einer herrschenden Außentemperatur mit einer Rücklauftemperatur zum Wärmeerzeuger zurückfließt. Dabei wird die pro Zeiteinheit vom Wärmeerzeuger abgegebene Wärmemenge in Abhängigkeit der Außentemperatur vorgegeben. Das heißt, daß die Leistung des Wärmeerzeugers in Abhängigkeit der Außentemperatur geregelt wird.

Aus der DE-PS 30 27 802 ist eine Regelung eines Heizkessels durch Anpassen der Kesselwassertemperatur an den durch die Außentemperatur bestimmten jeweiligen Wärmebedarf unter Verwendung eines Brenners für strömende Brennstoffe bekannt. Dabei erfolgt eine Anpassung der Brennerleistung, die einer Anpassung der Kesselwassertemperatur gleichgerichtet ist. Die Brennerleistung wird ebenso wie die Kesselwassertemperatur stetig oder stufenförmig verändert.

Weitere Anlagen zur Heizungsregelung bzw. Verfahren zum Steuern von Raumheizungsanlagen sind aus der DE 37 08 595 und der DE 35 18 889 sowie aus Baumgarth "Strategien zur energieoptimalen Heizungsregelung" in DE-Z, HLH Bd. 42 (1991), Nr. 5, Mai, S. 315-318, Andreas, Winter, Wolff "Regelung heiztechnischer Anlagen", VDI Verlag 19985, ISBN3-18-400 690-5, S. 25-27, Wildförster, Schulz, "Heizungsregelung nach neuem Konzept" in DE-Z, HLH, Bd. 37 (1986) Nr. 6, Juni, S 321-323, Schlapmann "Regelung mit Intelligenz" in DE-Z, sbz 20/1990, S. 1426-1432 bekannt.

Die bekannten Raumheizungsanlagen bedingen entweder häufige Brennerstarts oder sie sind von ihrer Einstellung her nur umständlich und aufwendig einzurichten. So muß beispielsweise bei der Einrichtung des aus der DE-PS 42 11 914 bekannten Verfahrens zur Regelung einer Raumheizungsanlage mit einer Datenverarbeitungseinheit zunächst einmal eine detaillierte Tabelle aufgestellt werden. Dazu sind eine Vielzahl von Echtzeit- und Echtwertmessungen notwendig, die zeitraubend und kostenspielig sind.

Es ist Aufgabe der Erfindung, aus dem Stand der Technik bekannte Verfahren zum Steuern eines Wärmeerzeugers einer Raumheizungsanlage sowie eine entsprechenden Raumheizungsanlage so zu verbessern, daß die beschriebenen Nachteile bekannter Raumheizungsanlagen weitestgehend vermieden werden und die Regelung solcher Raumheizungsanlagen insgesamt vereinfacht wird.

Die Lösung dieser Aufgabe besteht erfindungsgemäß in einem Verfahren der eingangs genannten Art, bei dem die Dauer von einem Einschalten des Wärmeerzeugers bis zum darauffolgenden Wiedereinschalten des Wärmeerzeugers gemessen und der so gewonnene Meßwert zur Bestimmung der Dauer mindestens einer folgenden Einschaltperiode verwendet wird. Die Dauer von einem Einschalten des Wärmeerzeugers bis zum darauffolgenden Wiedereinschalten des Wärmeerzeugers, also die Dauer zwischen zwei aufeinanderfolgenden Einschaltungen des Wärmeerzeugers ist somit die Summe der Dauer einer Einschaltperiode und der Dauer der darauffolgenden Ausschaltperiode. Die Ausschaltperiode kann dabei beliebig kurz sein.

Die Lösung der Aufgabe besteht außerdem in einer Raumheizungsanlage, die mindestens einen Heizkörper aufweist, der an einen von einem Wärmeübertragungsmedium durchströmten Leitungskreislauf mit einem Vorlaufzweig und einem Rücklaufzweig angeschlossen ist, sowie einen Wärmererzeuger, der zum Erwärmen des Wärmeübertragungsmediums gestaltet ist, einem Meßfühler zum Bestimmen einer Systemtemperatur der Raumheizungsanlage, einen Meßfühler zum Bestimmen einer Außentemperatur, eine Zeiterfassungseinrichtung und eine mit den Meßfühlern der Zeiterfassungseinrichtung und dem Wärmeerzeuger verbundenen Datenverarbeitungseinrichtung zum Steuern des erfindungsgemäßen Verfahrens.

Schließlich besteht die Lösung der Aufgabe in einer Datenverarbeitungseinrichtung für eine Raumheizungsanlage zum Ausführen des erfindungsgemäßen Verfahrens.

Unter Systemtemperatur wird hier - wie erwähnt - die Temperatur des Wärmeübertragungsmediums im Vor- oder im Rücklaufzweig der Raumheizungsanlage oder eine direkt von dieser Temperatur abhängige Temperatur der Raumheizungsanlage verstanden. Die Erfindung beruht auf der Erkenntnis, daß die Dauer zwischen zwei aufeinanderfolgenden Einschaltungen des Wärmeerzeugers ein Maß ist, das eine insbesondere unter energieökonomischen Gesichtspunkt günstige Regelung der vom Wärmeerzeuger abzugebenden Wärmeenergie erlaubt. Die Menge der vom Wärmeerzeuger abgegebenen Wärmeenergie wird dabei über die Dauer der Einschaltperiode gesteuert. Ein besonderer Vorteil des Verfahrens besteht darin, daß sie auf einfache Art und Weise ein selbständiges Optimieren der Heizungssteuerung erlaubt.

Die Dauer der Einschaltperiode wird vorzugsweise durch Modifizieren des Abschaltereignisses verlängert, wenn die Dauer einer zwischen zwei aufeinanderfolgenden Einschaltungen des Wärmeerzeugers einen unteren Grenzwert unterschreitet, während die Dauer zwischen zwei Einschaltungen durch Modifizieren des Abschaltereignisses verkürzt wird, wenn die Dauer zwischen zwei Einschaltungen einen oberen Grenzwert überschreitet. Ein geeigneter Wert für den unteren Grenzwert für die Dauer der Ausschaltperiode ist beispielsweise 30 Minuten, während ein geeigneter Wert für den oberen Grenzwert beispielsweise 45 Minuten ist. Die Einschalttemperatur wird vorzugsweise unter Berücksichtigung einer außerhalb des oder der zu beheizenden Räume herrschenden Außentemperatur ermittelt. Dies geschieht vorzugsweise gemäß der Formel $T_E = T_F + (T_F - T_a)$, in der $T_E$ die Einschalttemperatur ist, während $T_F$ eine Ausgangstemperatur, beispielsweise 20° C und $T_a$ die Außentemperatur ist.

Für das Abschaltereignis gibt es zwei gleichermaßen bevorzugte Alternativen. In einer ersten Alternative ist das Abschaltereignis der Ablauf einer vorher berechneten Dauer der Einschaltperiode und in einer zweiten Alternative das Überschreiten einer vorher berechneten Abschalttemperatur. Im ersten Fall wird der Wärmeerzeuger am Ende einer Einschaltperiode abgeschaltet, wenn eine unter Berücksichtigung der Einschalt- und der Außentemperatur vorausberechnete Dauer der Einschaltperiode seit dem Einschalten des Wärmeerzeugers verstrichen ist. Im zweiten Fall wird der Wärmeerzeuger am Ende einer Einschaltperiode abgeschaltet, wenn die Systemtemperatur eine Abschalttemperatur erreicht hat, die um eine Heiztemperatur höher ist als die Einschalttemperatur. Die Heiztemperatur ist demnach die Differenz zwischen Einschalt- und Abschalttemperatur.

Um für die erste Alternative die Dauer der Einschaltperiode vorauszuberechnen, wird ein gebäudeindividueller Wärmebedarfsfaktor berücksichtigt. Dieser wird vorzugsweise in seinem Wertebereich zwischen 10 und 120 sek / K anhand eines vorliegenden Wärmebedarfs automatisch berechnet. Die Dauer der Einschaltperiode wird dann vorzugsweise nach folgender Formel berechnet: $t_E = (T_E - T_a) \times f_A$. In dieser Formel ist $t_E$ die Dauer der Einschaltperiode, $T_E$ ist die Einschalttemperatur, $T_a$ ist die Außentemperatur und $f_A$ ist der Wärmebedarfsfaktor. Die Dauer der Einschaltperiode wird bei dieser Verfahrensvariante vorzugsweise dadurch verlängert, daß der Wärmebedarfsfaktor vergrößert wird und umgekehrt dadurch verkürzt, daß der Wärmebedarfsfaktor verkleinert wird.

Die für die zweite Verfahrensalternative benötigte Heiztemperatur ist vorzugsweise von der Außentemperatur abhängig und besonders bevorzugt außerdem von einer Optimaltemperatur. Die Größe der Heiztemperatur wird vorzugsweise nach folgender Formel berechnet: $T_H = 1/2 \times (T_F - T_a) + T_{opt}$. $T_H$ ist hierin die Heiztemperatur, $T_F$ ist eine vorgegebene Ausgangstemperatur, beispielsweise 20° C, $T_a$ ist die Außentemperatur und $T_{opt}$ ist die Optimaltemperatur. Bei der zweiten Verfahrensalternative wird die Dauer der Einschaltperiode vorzugsweise dadurch verlängert, daß die Heiztemperatur vergrößert wird und umgekehrt verkürzt, indem die Heiztemperatur verkleinert wird. Das Verlängern der Einschaltperiode geschieht vorzugsweise dadurch, daß die Optimaltemperatur vergrößert wird, während das Verkürzen der Einschaltperiode durch Verkleinern der Optimaltemperatur erreicht wird. Ein Ausgangswert für die Optimaltemperatur vor deren Vergrößerung oder Verkleinerung zum Anpassen der Dauer der Einschaltperiode wird in dem Wertebereich zwischen -40 und 40 Kelvin vorzugsweise anhand eines vorliegenden Wärmebedarf automatisch ermittelt.

Das beschriebene Verfahren erlaubt eine sehr einfache und darüberhinaus sehr energiesparende Regelung einer Raumheizungsanlage, insbesondere der erfindungsgemäßen.

Bevorzugt wird eine Raumheizungsanlage der vorgenannten Art, deren Wärmeübertragungsmedium eine Vorlauf- und eine Rücklauftemperatur besitzt, und die sich dadurch auszeichnet, daß die Differenz zwischen der Vorlauf- und der Rücklauftemperatur weniger als 20 Kelvin und besonders bevorzugt zwischen 1 und 6 Kelvin beträgt.

Außerdem weist die Raumheizungsanlage vorzugsweise einen Leitungskreislauf mit einer zwischen seinem Vor- und seinem Rücklaufzweig angeordneten Bypass-Leitung auf, die an dem Wärmeerzeuger vorbeiführt, sowie ein Umschaltventil, das in einer Stellung einen Kreislauf für das Wärmeübertragungsmedium freigibt, der so mit dem Wärmeerzeuger gekoppelt ist, daß das Wärmeübertragungsmedium mittels des Wärmeerzeugers erwärmbar ist, und das in einer zweiten Stellung einen Kreislauf freigibt, der an dem Wärmeerzeuger vorbei und durch die Bypass-Leitung führt.

Eine derartige Bypass-Leitung erlaubt es in vorteilhafter Weise, das Wäremeübertragungsmedium am Wäremeerzeuger vorbeizuleiten, wenn der Wärmeerzeuger abgeschaltet ist. Dadurch kühlt der Wärmeerzeuger, also beispielsweise ein Heizkessel, nicht wie bei herkömmlichen Heizungsanlagen aus. Außerdem kann die Systemtemperatur der Raumheizungsanlage an irgendeinem Punkt gemessen werden, weil die Differenz zwischen Vorlauf- und der Rücklauftemperatur nur sehr gering ist.

Weiterhin ist es im Zusammenhang mit bestimmten Wärmeerzeugern wie etwa Heizkesseln, für die eine bestimmte Mindest-Rücklauftemperatur erforderlich ist, vorteilhaft, zusätzlich zur Bypass-Leitung eine weitere Leitungsverbindung zwischen Vorlaufzweig und Rücklaufzweig oberhalb der Umwälzpumpe vorzusehen, die mit einem motorisch betriebenen Absperrventil und einem Temperaturregler ohne Hilfsenergie oder alternativ - je nach Anlagengröße - mit einem Temperaturregler mit Hilfsenergie, jedoch ohne zusätzliches motorisches Absperrventil, ausgestattet ist.

Bei beiden Systemen mit einer Bypass-Leitung und mit oder ohne einer zusätzlichen Verbindungsleitung zwischen Vor- und Rücklaufzweig, wird das Wärmeübertragungsmedium vorzugsweise solange durch den Wärmeerzeuger geführt, bis die Temperatur des Wärmeübertragungsmediums beim Austritt aus dem Wärmeerzeuger bis auf einen vorgegebenen Wert, z. B. 50° C abgesunken ist, um auf diese Weise die Nachheizenergie des Wärmeerzeugers zu nutzen. Erst dann wird das Wärmeübertragungsmedium solange am Heizkessel vorbeigeführt, bis die Systemtemperatur auf die Einschalttemperatur gesunken ist. Wenn es heißt, das Wärmeübertragungsmedium wird durch den Wärmeerzeugergeleitet, bedeutet dies bei einem Heizkessel mit Brenner, daß das Heizungswasser durch den Heizkessel geführt wird.

Bei Neuanlagen, sowie bei dafür geeigneten Altanlagen wird die Umwälzpumpe für das Wärmeübertragungsmedium von der Datenverarbeitungseinrichtung so geschaltet, daß ihre Förderleistung entsprechend der Wärmeanforderung geregelt wird. Mit dem Einschalten des Wärmeerzeugers wird auch die Umwälzpumpe auf eine größere Förderleistung eingestellt, so daß das Wärmeübertragungsmedium schneller durch den Wärmeerzeuger strömt. Dies sorgt für eine bessere Wärmeübertragung vom Wärmeerzeuger zum Wärmeübertragungsmedium. Nach Abschalten des Wärmeerzeugers schaltet die Datenverarbeitungseinrichtung die Umwälzpumpe wieder auf eine kleinere Förderleistung. Die Förderleistung kann dadurch gesteuert werde, daß entweder die Drehzahl einer Förderpumpe geregelt wird, oder daß zwei Pumpen parallel geschaltet werden, von denen eine ständig in Betrieb ist und die zweite immer dann eingeschaltet wird, wenn auch der Wärmeerzeuger eingeschaltet ist. Das Einschalten des Wärmeerzeugers ist bei einem Heizkessel, der mit einem Brenner ausgeschaltet ist, gleichbedeutend mit dem Starten des Brenners. Analog entspricht das Abschalten des Wärmeerzeugers einem Stoppen des Brenners.

Um eine Überhitzung der Raumheizungsanlage bei plötzlicher, umverhältnismäßig geringer Wärmeabnahme zu vermeiden, kann die maximale Systemtemperatur auf eine bestimmten Wert, beispielsweise 90° C, begrenzt werden.

Die Erfindung soll nun anhand von Ausführungsbeispielen mit Hilfe der Figuren näher erläutert werden. Diese zeigen:

Fig. 1 ein Blockschaltbild einer erfindungsgemäßen Raumheizungsanlage;

Fig. 2 eine Flußdiagramm einer erfindungsgemäßen Datenverarbeitungseinrichtung;

Fig. 3a bis 3e Temperatur-Einschalt-Zeitmeßtabellen zu einer ersten Variante des erfindungsgemäßen Verfahrens;

Fig. 4 Temperatur-Einschalt-Zeitmeßtabellen zu einer zweiten Variante des erfindungsgemäßen Verfahrens; und

Fig. 5 Temperatur-Brenne-Einschalt-Zeitdiagramme einer herkömmlichen Heizungsanlage.

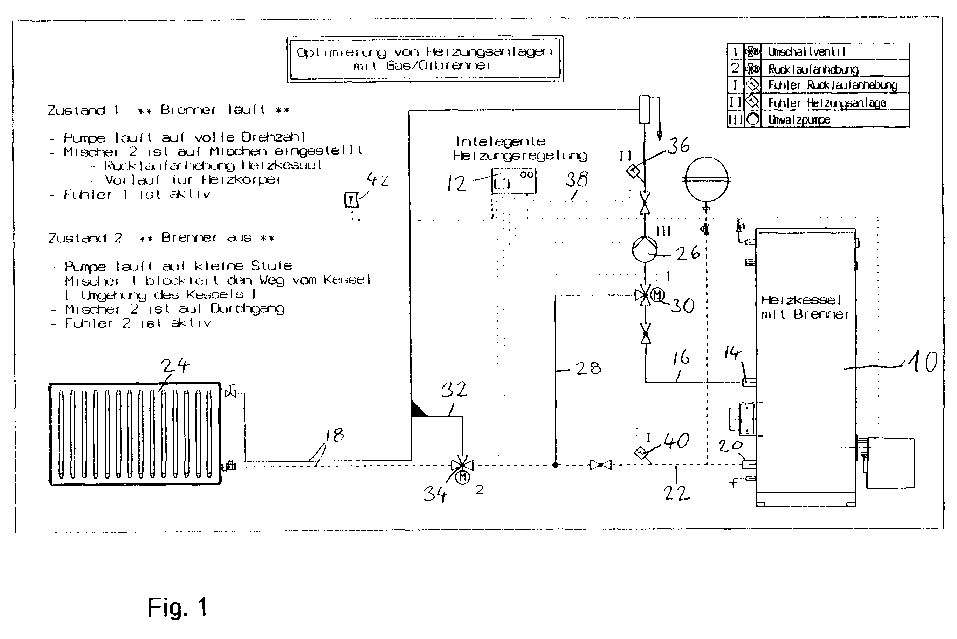

Fig. 1 zeigt einen als Heizkessel mit Brenner ausgebildeteten Wärmeerzeuger 10, welcher mit einer Datenverarbeitungseinrichtung 12 verbunden ist und von dieser gesteuert wird. Der Heizkessel besitzt einen Ausgang 14, welcher mit einem Vorlaufzweig 16 einer einen Leitungskreislauf bildenden Zirkulationsleitung 18 verbunden ist sowie einen Eingang 20, welcher mit einem Rücklaufzweig 22 der Zirkulationsleitung 18 verbunden ist. Der Vorlaufzweig 16 führt vom Ausgang 14 des Heizkessels zu einem oder mehreren Heizkörpern, von denen der Heizkörper 24 exemplarisch dargestellt ist. Von diesem Heizkörper 24 führt der Rücklaufzweig 22 zurück zum Heizkessel. Im Vorlaufzweig 16 ist eine Umwälzpumpe 26 angeordnet, die mit der Datenverarbeitungseinrichtung 12 verbunden ist und von dieser gesteuert wird. Vom Rücklaufzweig 22 führt eine Bypass-Leitung 28 zum Vorlaufzweig 16 und mündet dort in einem Umschaltventil 30, das zwischen dem Ausgang 14 des Heizkessels und der Umwälzpumpe 26 im Vorlaufzweig 16 angeordnet ist. Das Umschaltventil 30 ist ebenfalls mit der Datenverarbeitungseinrichtung 12 verbunden und kann von dieser umgeschaltet werden. Durch Umschalten des Umschaltventils 30 kann ein in der Zirkulationsleitung 18 strömendes Wärmeübertragungsmedium wie Wasser wahlweise durch den Heizkessel hindurch oder an ihm vorbeigeleitet werden. Eine weitere Verbindungsleitung 32 zwischen Vorlaufzweig 16 und Rücklaufzweig 22 zweigt zwischen der Umwälzpumpe 26 und dem Heizkörper 24 vom Vorlaufzweig 16 ab und mündet in einem zweiten Umschaltventil 34, das im Rücklaufzweig 22 zwischen Heizkörper 24 und Eingang 20 des Heizkessels angeordnet ist. Auch das zweite Umschaltventil 34 ist mit der Datenverarbeitungseinrichtung 12 verbunden und kann von dieser umgeschaltet werden.

Weiterhin ist im Vorlaufzweig 16 ein Temperaturfühler 36 angeordnet, der über eine Verbindungsleitung 38 mit der Datenverarbeitungseinrichtung 12 verbunden um gemessene Temperaturwerte an die Datenverarbeitungseinrichtung 12 weiterzugeben. Auch im Rücklaufzweig 22 ist ein zweiter Temperaturfühler 40 angeordnet, der zum Weitergeben gemessener Temperaturwerte für die Rücklauftemperatur an die Datenverarbeitungseinrichtung mit dieser verbunden ist. Schließlich ist ein dritter Temperaturfühler 42 vorgesehen, um die Außentemperatur Ta zu messen. Auch der dritte Temperaturfühler 42 ist mit der Datenverarbeitungseinrichtung 12 so verbunden, daß er die gemessenen Außentemperaturwerte an die Datenverarbeitungseinrichtung 12 weitergeben kann.

Die Datenverarbeitungseinrichtung 12 weist Programmspeicher sowie Dateneingangsleitungen und Datenausgangsleitungen auf, über die beispielsweise die von den Temperaturfühlern 36, 40 und 42 ermittelten Temperaturwerte empfangen und Steuersignale beispielsweise an den Wärmeerzeuger 10, die Umwälzpumpe 26 sowie die beiden Umschaltventile 30 und 34 ausgegeben werden kann. Schließlich weist die Datenverarbeitungseinrichtung 12 auch einen Speicher zur Speicherung eines gebäudeindividuellen Wärmebedarffaktors $f_A$ auf sowie eine Zeiterfassungseinrichtung und Datenvergleichs- und Verarbeitungsmittel. Mit Hilfe der Datenverarbeitungseinrichtung 12 können die folgenden Werte vorgegeben oder von dieser ermittelt werden: Eine Außentemperatur $T_a$, eine Systemtemperatur $T_S$, eine Einschalttemperatur $T_E$, eine gebäudeindividuellen Wärmebedarfsfaktor $f_A$, ein Signal zum Ein- bzw. Ausschalten des Wärmeerzeugers durch Starten oder Stoppen von dessen Brenner, ein Signal zum Umschalten des Umschaltventils 30 und ein Signal zum Umschalten des zweiten Umschaltventils 34.

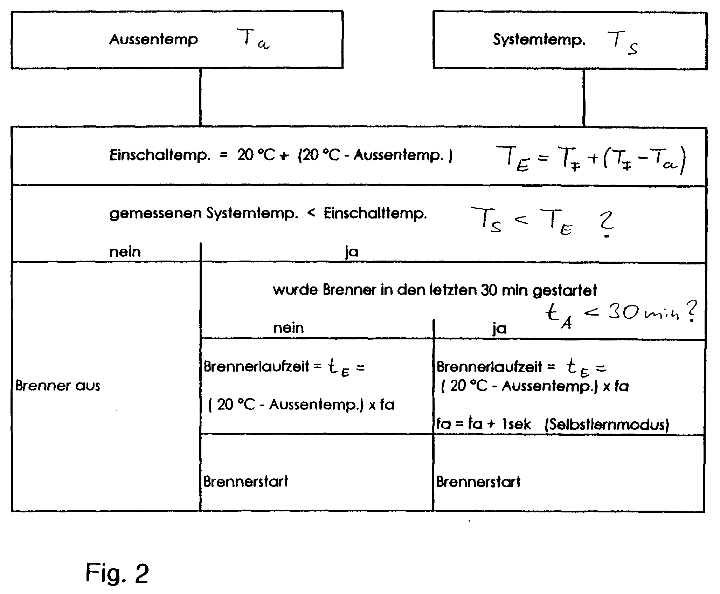

Die Funktionsweise der in Fig. 1 dargestellten Heizungsanlage wird anhand des in Fig. 2 dargestellten Flußdiagramms deutlich. Die Datenverarbeitungseinrichtung 12 mißt ständig oder in bestimmten Zeitabständen über einen Außentemperaturfühler 42 die Außentemperatur $T_a$ sowie über den ersten Temperaturfühler 36 die Systemtemperatur $T_S$ der Raumheizungsanlage. Die Einschalttemperatur $T_E$ wird durch die Formel

$$T_E = T_F + (T_F - T_a)$$

$T_F$ ist dabei ein vorgegebener Temperaturwert der im Ausführungsbeispiel zu 20° C gewählt ist.

Die Datenverarbeitungseinrichtung 12 vergleicht ständig die Einschalttemperatur $T_E$ mit der Systemtemperatur $T_S$. Ergibt dieser Vergleich, daß die Systemtemperatur $T_S$ kleiner ist als die Einschalttemperatur $T_E$, gibt die Datenverarbeitungseinrichtung 12 ein Signal an den Brenner des Wärmeerzeugers 10 ab, mit dem dieser eingeschaltet wird. Die Dauer, für die der Brenner dann eingeschaltet d. h. die Dauer der Einschaltperiode $t_E$ berechnet sich beim ersten Einschalten des Brenners nach der Formel

$$t_E = (20° C - T_a) \times f_A$$

Der Ablauf dieser Zeitdauer nach dem Einschalten des Brenners stellt ein Abschaltereignis dar, das die Datenverarbeitungseinrichtung 12 dazu veranlaßt, ein Abschaltsignal an den Brenner abzugeben, und den Brenner wieder abzuschalten.

Solange der Brenner eingeschaltet ist, wird das durch die Zirkulationsleitung 18 und den Heizkessel strömende Wasser erwärmt. Dadurch steigt die Systemtemperatur $T_S$ bis über die Einschalttemperatur $T_E$ an. Nach dem Abschalten des Brenners sinkt die Systemtemperatur $T_S$ wieder weil das erwärmte Wasser durch die Zirkulationsleitung 18 und durch die Heizkörper 24 zirkuliert und über die Heizkörper 24 Wärme an zu beheizende Räume abgibt. Die Systemtemperatur $T_S$ sinkt solange, bis sie unter die Einschalttemperatur $T_E$ fällt. Dies wird von der Datenverarbeitungseinrichtung 12 durch den zuvor beschriebenen Vergleich der Temperaturen registriert. Daraufhin schaltet die Datenverarbeitungseinrichtung 12 den Brenner wieder ein. Außerdem wird in der Datenverarbeitungseinrichtung 12 der Zeitpunkt des letztmaligen Einschaltens des Brenners mit dem darauffolgenden Zeitpunktes für Wiedereinschalten

des Brenners verglichen, um die Zeitdauer $t_p$ zwischen zwei Brennerstarts zu bestimmen. Ist diese Zeitdauer $t_p$ kürzer als beispielsweise 30 Minuten, wird der Wärmebedarfsfaktor $f_A$ auf einen modifizierten Wärmebedarfsfaktor $f_A^*$ erhöht und zwar beispielsweise um eine Sekunde pro Kelvin oder fünf Sekunden pro Kelvin:

$$f_A^* = f_A + 1 \text{ sek} / K$$

Der modifizierte Wärmebedarfsfaktor $f_A^*$ wird zur Berechnung der aktuellen Dauer der Einschaltperiode verwandt:

$$t_E = (20° \text{ C} - T_a) \times f_A^*$$

Durch den höheren modifizierten Wärmebedarfsfaktor $f_A^*$ verlängert sich die Dauer der Einschaltperiode. Dadurch wird über die Dauer der Einschaltperiode mehr Energie an das durch Heizkessel und Zirkulationsleitung 18 strömende Wasser abgeben, das dadurch stärker erwärmt wird. Entsprechend dauert es länger, bis die Systemtemperatur $T_S$ in der auf die verlängerte Einschaltperiode folgenden Ausschaltperiode wieder unter die Einschalttemperatur $T_E$ fällt. Das heißt, daß sich die Dauer der Ausschaltperiode verlängert. Infolge der verlängerten Einschaltperiode und der daraus folgenden Verlängerung der folgenden Ausschaltperiode verlängert sich auch die Zeitdauer $t_p$ zwischen zwei aufeinanderfolgenden Brennerstarts. Falls diese Zeitdauer $t_p$ auf über 30 oder 60 Minuten steigt, wird der Wärmebedarfsfaktor $f_A^*$ zur Berechnung der Dauer der folgenden Einschaltperiode nicht weiter erhöht, sondern beibehalten.

Falls die Bestimmung der Zeitdauer $t_p$ zwischen zwei aufeinanderfolgenden Brennerstarts durch die Datenverarbeitungseinrichtung 12 ergeben sollte, daß die Zeitdauer $t_p$ beispielsweise länger als 45 Minuten betragen wird der Wärmebedarfsfaktor $f_A^*$ in der Weise modifiziert, daß er um beispielsweise eine Sekunde pro Kelvin oder fünf Sekunden pro Kelvin erniedrigt wird. Dies führt entsprechend zu einer Verkürzung der nächsten Einschaltperiode, damit zu einer Verringerung der während er Einschaltperiode an das Wärmeübertragungsmedium dienende Wasser abgegebenen Energiemenge, folglich zu einer niedrigeren Systemtemperatur am Ende der Einschaltperiode und schließlich dazu, daß die Systemtemperatur $T_S$ schneller unter die Einschalttemperatur $T_E$ fällt, als in der vorangegangenen Ausschaltperiode. Nach einer Modifikation, möglicherweise aber auch nach mehreren Modifikation des Wärmebedarfsfaktors $f_A^*$ während folgender Ein- und Ausschaltperioden wird schließlich erreicht, daß die Zeitdauer $t_p$ zwischen zwei aufeinanderfolgenden Brennerstarts wieder unter zwei Stunden fällt. Ist dies geschehen, erfolgt keine weitere iterative Anpassung des Wärmebedarfsfaktors $f_A^*$; vielmehr wird der zuletzt bestimmte Wärmebedarfsfaktor $f_A^*$ solange beibehalten, bis die Datenverarbeitungseinrichtung 12 ermittelt, daß die Zeitdauer $t_p$ zwischen zwei Einschaltungen des Wärmeerzeugers entweder den oberen Grenzwert von 45 Minuten überschritten oder den unteren Grenzwert von 30 Minuten unterschritten hat. Auf diese Weise wird ein anfänglich vorgegebener Wärmebedarfsfaktor $f_A$ in einem iterativen Prozeß solange zum Wärmebedarfsfaktor $f_A^*$ modifiert, bis dieser eine unter energetischen Gesichtspunkten günstige Steuerung der Raumheizungsanlage erlaubt. Ein üblicher Wert für den zunächst vorgegebenen Anfangswert von $f_A$ liegt im Bereich zwischen 10 und 120 Sekunden pro Kelvin und bevorzugt im Wertebereich zwischen 20 und 30 Sekunde pro Kelvin. Der vorzugebende gebäudeindividuelle Wärmebedarfsfaktor $f_A$ kann von der Datenverarbeitungseinrichtung 12 entsprechend der jeweiligen Gebäudecharakteristik ermittelt und eingestellt werden.

Zusammengefaßt besteht das zuvor beschriebene Verfahren darin, daß der Brenner nach einem Temperaturvergleich zwischen Systemtemperatur $T_S$ und Einschalttemperatur $T_E$ eingeschaltet wird, sobald die Systemtemperatur $T_S$ die Einschalttemperatur $T_E$ unterschreitet. Die Dauer $t_E$, für die der Brenner eingeschaltet wird, bemißt sich dabei aus der Differenz der Einschalttemperatur $T_E$ und der Außentemperatur $T_a$, wobei dieser Differenzwert mit einem gebäudeindividuellen Wärmebedarfsfaktor $f_A$ multipliziert wird. Ein Wert für den Wärmebedarfsfaktor $f_A$ wird zunächst näherungsweise vorherberechnet oder einfach pauschal vorgegeben. Ergibt sich, daß die Zeitdauer zwischen dem letzten Einschalten und dem folgenden Einschalten des Wärmeerzeugers geringer ist als ein vorgegebener unterer Grenzwert, z. B. 30 Minuten, so wird der Wärmebedarfsfaktor $f_A$ automatisch um einen festen Wert erhöht. Diese Erhöhung wird im Laufe folgender Ein- und Ausschaltperioden so oft vorgenommen, bis die Zeitdauer zwischen dem Einschalten und dem neuerlichen Einschalten des Wärmeerzeugers den vorgegebenen Wert, beispielsweise 30 Minuten, überschreitet. Ergibt sich umgekehrt, daß die Zeitdauer zwischen dem Einschalten des Wärmeerzeugers und dem neuerlichen Einschalten des Wärmeerzeugers einen bestimmten Zeitwert, beispielsweise 45 Minuten, übersteigt, so verkleinert die Datenverarbeitungseinrichtung des Wärmebedarfsfaktor $f_A$ für die Berechnung der folgenden Einschaltperiode. Es ergibt sich die zuvor beschriebenen einfache automatische Bestimmung des optimalen Wärmebedarfsfaktors.

In einer alternativen Verfahrensvariante wird der Brenner ebenso wie bei der vorbeschriebenen Verfahrensvariante eingeschaltet, sobald die Systemtemperatur $T_S$ unter die Einschalttemperatur $T_E$ fällt. Die Einschalttemperatur $T_E$ wird dabei ebenso berechnet, wie zuvor beschrieben. Im Unterschied zum dem vorher beschriebenen Verfahren berechnet die Datenverarbeitungseinrichtung 12 für die alternative Verfahrensvariante die Dauer der Einschaltperiode nicht voraus. Vielmehr schaltet die Datenverarbeitungseinrichtung 12 den Brenner ab, sobald die Systemtemperatur $T_S$

eine Abschalttemperatur $T_A$ überschreitet. Dies geschieht in der Datenverarbeitungseinrichtung 12 durch ständigen oder regelmäßigen Vergleich der gemessenen Systemtemperatur $T_S$ mit der Abschalttemperatur $T_A$ und Abgabe eines Abschaltsignals an dem Brenner, sobald $T_S$ größer ist als $T_A$.

Die Abschalttemperatur $T_A$ ergibt sich dabei aus der Summe der Einschalttemperatur $T_A$ und einer Heiztemperatur $T_H$:

$$T_A = T_E + T_H$$

Die Aufheiztemperatur berechnet sich nach folgender Formel:

$$T_H = (20° \, C - T_a) / 2 + T_{opt}$$

$T_{opt}$ stellt darin eine vorzugebende Optimaltemperatur dar.

Mit der zuvor aufgeführten Formel für die Einschalttemperatur ergibt sich die folgende Formel für die Abschalttemperatur:

$$T_A = 20° \, C + (20° \, C - T_a) + (20° \, C - T_a) / 2 + T_{opt}$$

Wie der Wärmebedarfsfaktor $f_A$ wird die Optimaltemperatur $T_{opt}$ zunächst vorgegeben und kann dann während folgender Ausschalt- und Einschaltperioden schrittweise erhöht oder erniedrigt werden, um auf diese Weise die Dauer der Einschaltperiode zu verlängern oder zu verkürzen, falls die Dauer $t_p$ zwischen einem Einschalten des Wärmeerzeugers und dem darauffolgenden Wiedereinschalten 30 Minuten unterschreitet oder 45 Minuten überschreitet. Dies führt zu einer ähnlichen Optimierung der Optimaltemperatur $T_{opt}$, wie zuvor für den Wärmebedarfsfaktor $f_A$ beschrieben wurde.

Ermittelt die Datenverarbeitungseinrichtung beispielsweise mit Hilfe ihrer Zeiterfassungseinrichtung, daß die Zeitdauer $t_p$ zwischen dem letzten Einschalten und dem folgendem Einschalten des Wärmeerzeugers 10 geringer ist als beispielsweise 30 Minuten, wird die Heiztemperatur durch Erhöhen der Optimaltemperatur $T_{opt}$ beispielsweise um 1° C oder 5° C erhöht. Diese Erhöhung von $T_H$ bzw. $T_{opt}$ wird so oft vorgenommen, bis die Zeitdauer zwischen dem Abschalten und neuerlichem Einschalten des Wärmeerzeugers einen bestimmten Wert angenommen hat.

Wenn die Datenerfassungseinrichtung 12 umgekehrt mit Hilfe der Zeiterfassungseinrichtung ermittelt, daß die Zeitdauer zwischen dem Einschalten des Wärmeerzeugers 10 und seinem neuerlichen Einschalten einen oberen Grenzwert, beispielsweise zwei Stunden übersteigt, erniedrigt die Datenverarbeitungseinrichtung den Wert für $T_{opt}$ und damit die Heiztemperatur $T_H$ beispielsweise um 1° C oder 5° C.

Die beschriebenen Verfahren beruhen auf der Überlegung, die Regelung einer Raumheizungsanlage von einer unkontrollierten Wärmebevorratung auf eine kontrollierte Wärmeerzeugung umzustellen.

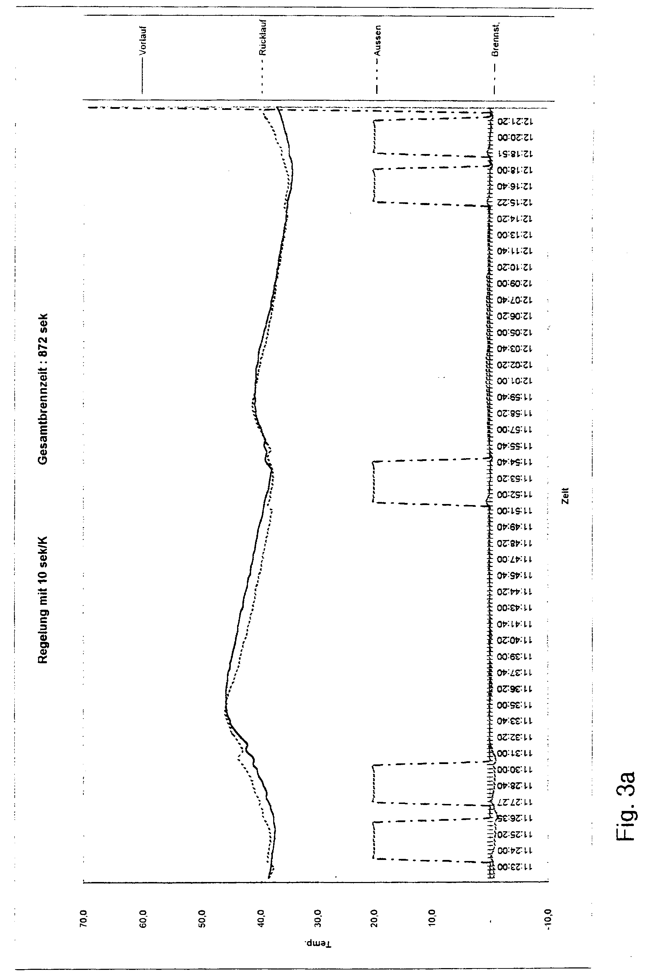

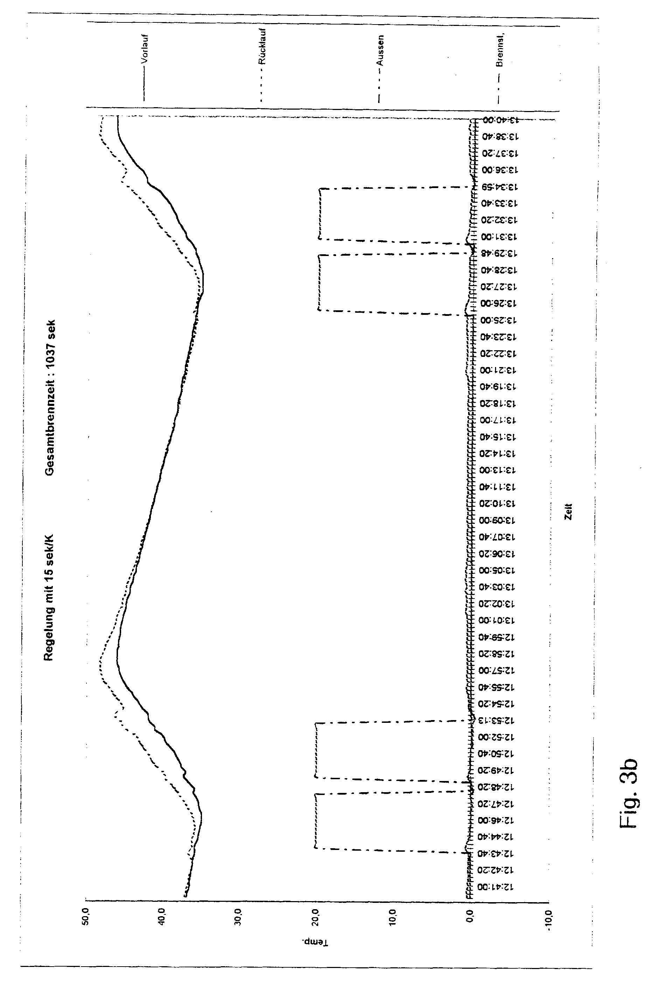

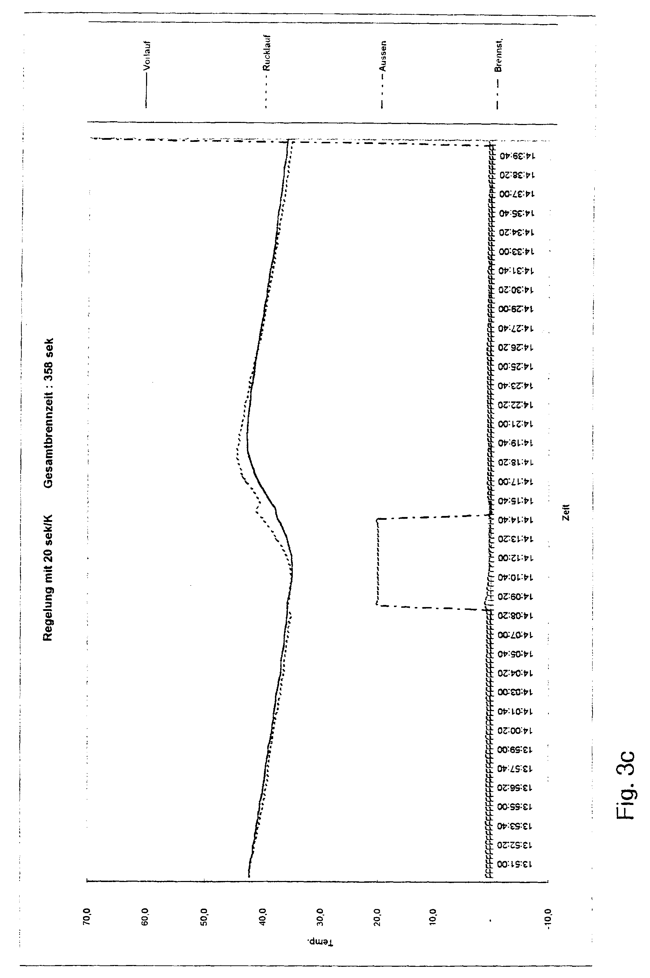

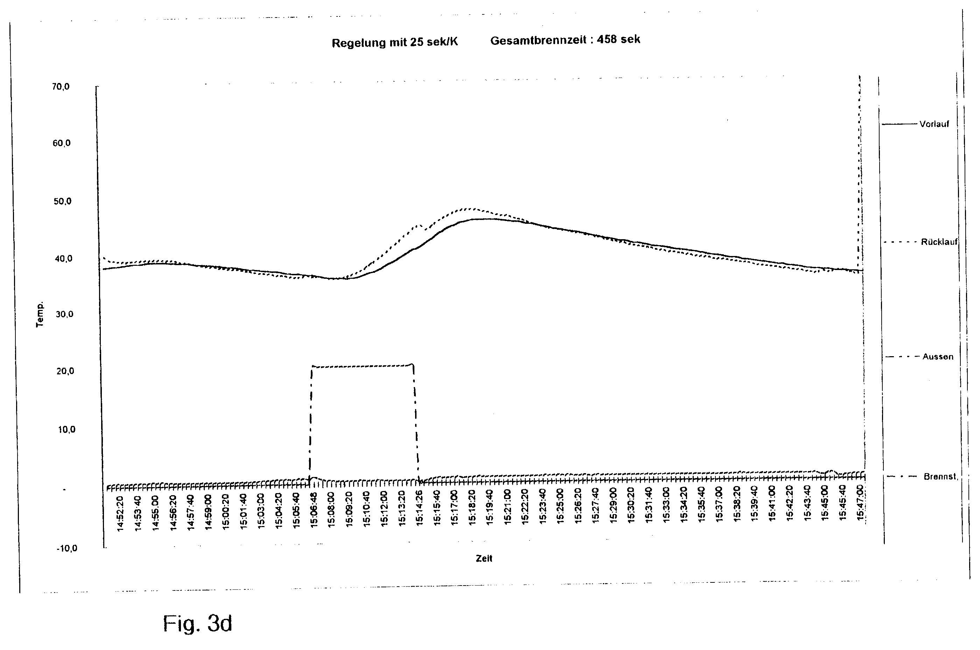

Die Figuren 3a bis 3d zeigen beispielhaft den Temperaturverlauf der Vorlauf- und der Rücklauftemperatur sowie die Einschaltperioden des Brenners bei verschiedenen Wärmebedarfsfaktoren $f_A$. In Figur 3a beträgt $f_A$ 10 sek / K, in Figur 3b 15 sek / K, in Figur 3c 20 sek / K und in Figur 3d 25 sek / K. Aus den Diagrammen wird ersichtlich, daß es jeweils nur einen minimalen Temperaturunterschied zwischen der Vorlauf- und der Rücklauftemperatur gibt, und daß die Zahl der Einschaltperioden bezogen auf einen Zeitbereich z. B. eine Stunde, immer kleiner wird.

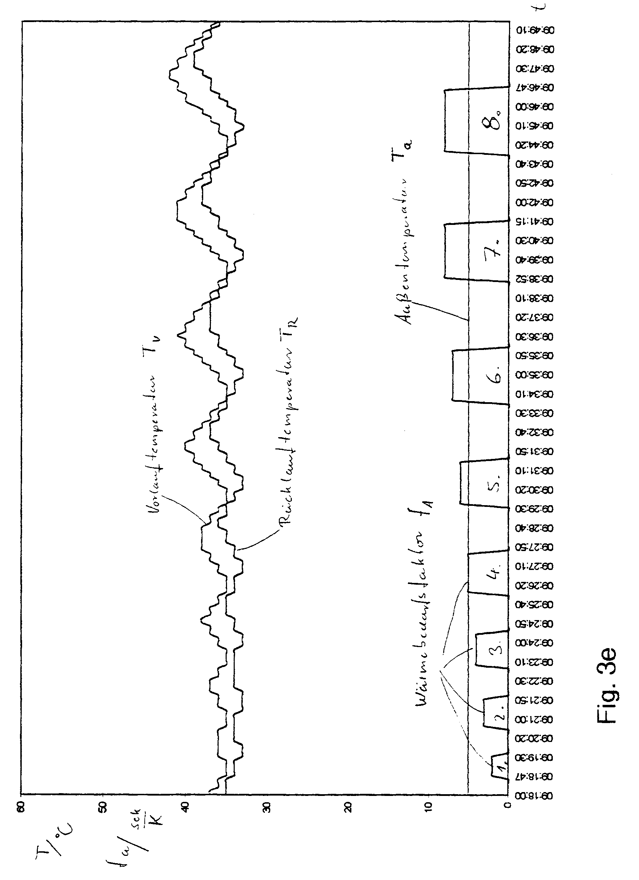

Figur 3e zeigt ein Diagramm ähnlich den Figuren 3a bis d. In dem Diagramm dargestellt sind die Vorlauf- und die Rücklauftemperatur der Raumheizungsanlage sowie die Außentemperatur und die Dauer der Brennerstarts. Die Außentemperatur beträgt über den gesamten aufgezeichneten Zeitraum 5° C. Dargestellt sind 8 Brennerstarts, deren Dauer gemäß der ersten Verfahrensvariante anhand eines Wärmebedarfsfaktors $f_A$ vorherberechnet wurde. Der erste Brennerstart dauerte 53 Sekunden bei einem Wärmebedarfsfaktor von $f_A$ = 2 sek / K, der zweite Brennerstart dauerte 68 Sekunden bei $f_A$ = 3 sek / K, der dritte Brennerstart dauerte 83 Sekunden bei $f_A$ = 4 sek / K, der vierte Brennerstart dauerte 98 Sekunden bei $f_A$ = 5 sek / K, der fünfte Brennerstart dauerte 123 Sekunden bei $f_A$ = 6 sek / K, der sechste Brennerstart dauerte 128 Sekunden bei $f_A$ = 7 sek / K, der siebte Brennerstart dauerte 143 Sekunden bei $f_A$ = 8 sek / K und der achte Brennerstart dauerte 158 Sekunden bei $f_A$ = 8 sek / K. Die im Vorlaufzweig gemessene Einschalttemperatur betrug regelmäßig 35° C. Zu erkennen ist, wie die Vorlauftemperatur regelmäßig auf von 35° C an ansteigt, nachdem der Wärmeerzeuger eingeschaltet wurde und nach dem Abschalten des Wärmeerzeugers also wieder bis auf die Einschalttemperatur von 35° C abkühlt. Nach dem 8, dargestellten Brennerstart steigt die Vorlauftemperatur bis auf 42° C an. Die Rücklauftemperatur folgt in ihrem Verlauf der Vorlauftemperatur mit einer gewissen Phasenverzögerung und ist maximal 3° C kälter als die Vorlauftemperatur. Zu erkennen ist, daß die iterative Anpassung des Wärmebedarfsfaktors $f_A$ dazu führt, daß dieser bei den ersten Brennerstarts zunächst kontinuierlich um jeweils eine Sekunde pro Kelvin erhöht wird, bisher den Wert von 8 sek / K erreicht hat. Bei diesem Wert war dann die Ausschaltperiode in Folge der ausreichenden Erwärmung des Wärmeübertragungsmediums auf bis zu 42° C während der Einschaltperiode ausreichend lang, so daß es zu keiner weiteren Modifikation des Wärmebedarfsfaktors $f_A$ kam

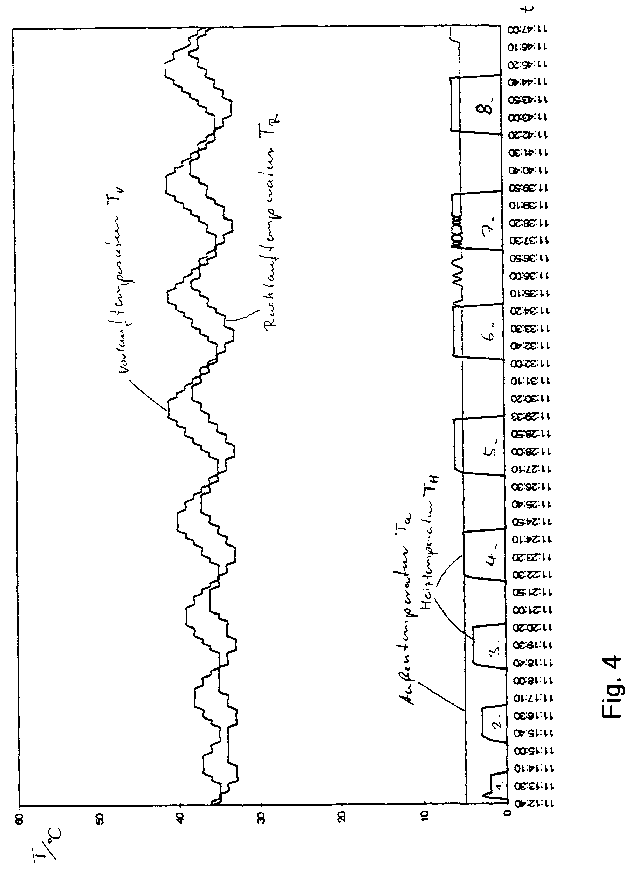

Fig. 4 zeigt ein Diagramm ähnlich den in den Figuren 3a bis e dargestellten. Jedoch wurde das in Figur 4 dargestellte Diagramm unter Anwendung der zweiten Verfahrensvariante erstellt, bei der der Wärmeerzeuger nicht nach Ablauf einer vorherberechneten Dauer der Einschaltperiode abgeschaltet wird, sondern nach Erreichen einer vorherberechneten Abschalttemperatur $T_A$. Auch in Figur 4 ist die Außentemperatur 5° C und die Einschalttemperatur 35° C. Abgebildet sind wieder 8 Brennerstarts. Für den ersten Brennerstart betrug die Heiztemperatur $T_H$ 2° C. Entsprechend wurde der Brenner abgeschaltet, nachdem die Vorlauftemperatur $T_V$ von 35° C auf 37° C angestiegen war. Die Brennerlaufzeit betrug dazu 78 Sekunden. Nachdem die Vorlauftemperatur $T_V$ wieder auf 35° C gefallen war, wurde der Brenner des Wärmeerzeugers wieder gestartet. Für diese Einschaltperiode wurde die Heiztemperatur $T_H$ auf 3 Kelvin erhöht. Entsprechend wurde der Brenner nach dem zweiten Start abgeschaltet, nachdem die Vorlauftemperatur 38° C erreicht hatte. Die Einschaltperiode betrug hierfür 86 Sekunden. Für den dritten Brennerstart betrug die Heiztemperatur $T_H$ 4 Kelvin, resultierend in einer Brennerlaufzeit von 107 Sekunden, für den 4. Brennerstart war $T_H$ 5 Kelvin, resultierend in einer Brennerlaufzeit von 131 Sekunden, für den 5. Brennerstart und die folgenden Brennerstarts 6 bis 8 war $T_H$ 6 Kelvin, resultierend in einer Brennerlaufzeit von 152 für den 5. Brennerstart, von 145 Sekunden für den 6. Brennerstart, von 152 Sekunden für den 7. Brennerstart und von 148 für den 8. Brennerstart. Zu erkennen ist wieder, wie die iterative Anpassung der Heiztemperatur $T_H$ dazu führt, daß sich die Heiztemperatur selbständig auf 6 Kelvin einstellt.

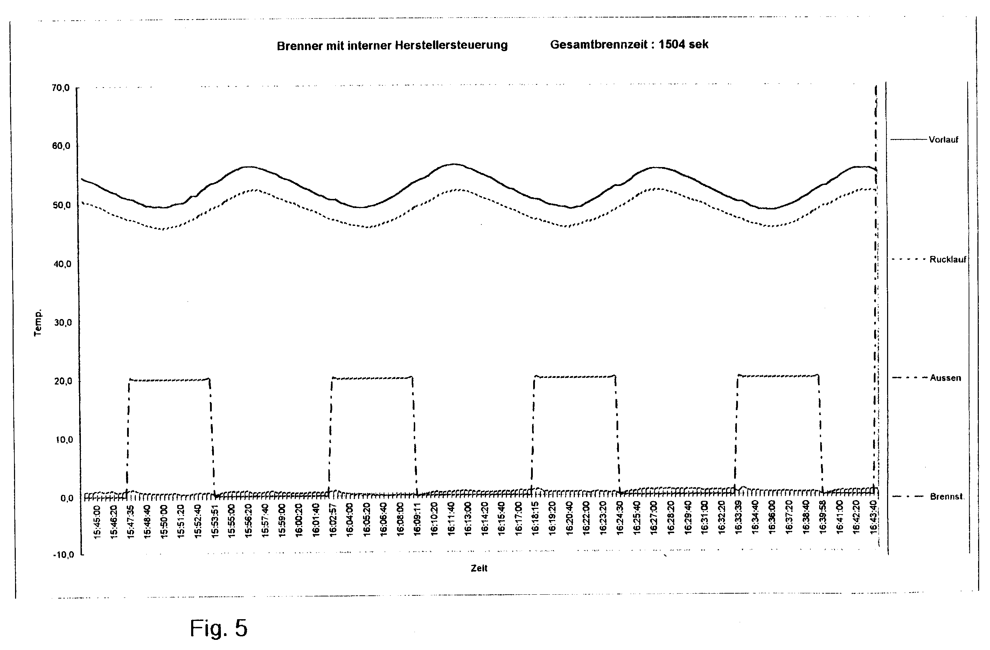

Figur 5 zeigt schließlich ein den Figuren 3 und 4 vergleichbares Diagramm, jedoch für eine herkömmliche Heizungsanlage, deren Brenner von einer internen Steuerung des Brennerherstellers gesteuert wird. Für diese Steuerung, eine witterungsgeführte Vorlauftemperatursteuerung, ermittelt ein Regler anhand einer gemessenen Außentemperatur und einer fest eingestellten Heizkurve eine Vorlauftemperatur. Der Regler sorgt dafür, daß diese Vorlauftemperatur von dem Kessel gehalten wird, egal ob die erzeugte Energie zur Raumheizung benötigt wird oder nicht. Diese Steuerung führt zu vergleichsweise vielen Brennerstarts innerhalb einer Zeiteinheit z. B. einer Stunde. Dies ist unter energieökonomischen Gesichtspunkten ungünstig.

## Patentansprüche

1.  Verfahren zur Steuerung eines Wärmeerzeugers einer mit einem Wärmeübertragungsmedium arbeitenden Raumheizungsanlage, deren Wärmeübertragungsmedium eine Systemtemperatur ($T_{S)}$ besitzt, bei dem der Wärmeerzeuger zum Aufheizen des Wärmeübertragungsmediums für eine Einschaltperiode eingeschaltet wird, wenn die Systemtemperatur ($T_S$) eine Einschalttemperatur ($T_E$) unterschreitet, bei dem die Einschaltperiode durch Abschalten des Wärmeerzeugers beendet wird, sobald eine vorherberechnetes Abschaltereignis eintritt und der Wärmeerzeuger nach Ablauf einer Ausschaltperiode wieder eingeschaltet wird, wenn die Einschalttemperatur ($T_E$) erneut unterschritten wird,
    dadurch gekennzeichnet, daß die Dauer ($t_p$) von einem Einschalten des Wärmeerzeugers bis zum darauffolgenden Wiedereinschalten des Wärmeerzeugers gemessen und der so gewonnene Meßwert zur Bestimmung der Dauer ($t_E$) mindestens einer folgenden Einschaltperiode verwendet wird.

2.  Verfahren nach Anspruch 1, bei dem die Dauer ($t_E$) der Einschaltperiode durch Modifizieren des Abschaltereignisses verlängert wird, wenn die Dauer ($t_p$) zwischen zwei aufeinanderfolgenden Einschaltungen des Wärmeerzeugers einen unteren Grenzwert unterschreitet, und die Dauer ($t_E$) der Einschaltperiode durch Modifizieren des Abschaltereignisses verkürzt wird, wenn die Dauer ($t_p$) einen oberen Grenzwert überschreitet.

3.  Verfahren nach Anspruch 1 oder 2, bei dem eine außerhalb eines zu beheizenden Raumes oder Gebäudes herrschende Außentemperatur ($T_a$) gemessen und zur Ermittlung der Einschalttemperatur ($T_E$) verwendet wird, indem die Einschalttemperatur ($T_E$) nach folgender Formel ermittelt wird:

$$T_E = T_F + (T_F - T_a),$$

    wobei $T_F$ eine vorgebbare Ausgangstemperatur ist.

4.  Verfahren nach einem der Ansprüche 1 bis 3, bei dem das Abschaltereignis der Ablauf einer vorherberechneten Dauer ($t_E$) der Einschaltperiode ist und der Wärmeerzeuger am Ende einer Einschaltperiode abgeschaltet wird, wenn eine unter Berücksichtigung der Einschalt- und der Außentemperatur vorherberechnete Dauer ($t_E$) der Einschaltperiode seit dem Einschalten des Wärmeerzeugers verstrichen ist.

5.  Verfahren nach Anspruch 4, bei dem zur Vorherberechnung der Dauer ($t_E$) der Einschaltperiode ein Gebäude individueller Wärmebedarfsfaktor ($f_A$) berücksichtigt wird, der in seinem Wertebereich zwischen 10 und 120 sek / K anhand eines vorliegenden Wärmebedarfs automatisch bestimmt wird, wobei die Dauer ($t_E$) der Einschaltperiode nach folgender Formel vorherberechnet wird:

$$t_E = (T_E - T_a) \times f_A$$

und die Dauer ($t_E$) der Einschaltperiode verlängert wird, indem der Wärmebedarfsfaktor ($f_A$) vergrößert wird und die Dauer ($t_E$) der Einschaltperiode verkürzt wird, indem der Wärmebedarfsfaktor ($f_A$) verkleinert wird.

6. Verfahren nach einem der Ansprüche 1 bis bei dem das Abschaltereignis das Überschreiten einer vorherberechneten Abschalttemperatur ($T_A$) ist und der Wärmeerzeuger am Ende einer Einschaltperiode abgeschaltet wird, wenn die Systemtemperatur ($T_S$) eine Abschalttemperatur ($T_A$) erreicht hat, die um eine Heiztemperatur ($T_H$) höher ist, als die Einschalttemperatur ($T_E$).

7. Verfahren nach Anspruch 6, bei dem die Größe der Heiztemperatur ($T_H$) von der Außentemperatur ($T_a$) und von einer Optimaltemperatur ($T_{opt}$) abhängig ist und bei dem die Größe der Heiztemperatur ($T_H$) nach folgender Formel berechnet wird:

$$T_H = 1/2 \times (T_F - T_a) + T_{opt}$$

und bei dem die Dauer ($t_E$) der Einschaltperiode verlängert wird, indem die Heiztemperatur ($T_H$) vergrößert wird, indem die Optimaltemperatur ($T_{opt}$) vergrößert wird und die Dauer ($t_E$) der Einschaltperiode verkürzt wird, indem die Heiztemperatur ($T_H$) verkleinert wird, indem die Optimaltemperatur ($T_{opt}$) verkleinert wird.

8. Verfahren nach Anspruch 7, bei dem die Optimaltemperatur ($T_{opt}$) im Wertebereich zwischen -40 und 40 Kelvin anhand eines vorliegenden Wärmebedarfs automatisch bestimmt wird.

9. Raumheizungsanlage, die mindestens einen Heizkörper (24) aufweist, der in einen von einem Wärmeübertragungsmedium durchströmten Leitungskreislauf (18) mit einem Vorlaufzweig (16) und einem Rücklaufzweig (22) angeschlossen ist, sowie einen Wärmeerzeuger (10), der zum Erwärmen des Wärmeübertragungsmedium gestaltet ist, einem Meßfühler (36) zum Bestimmen einer Systemtemperatur der Raumheizungsanlage, einem Meßfühler (42) zum Bestimmen einer Außentemperatur, eine Zeiterfassungseinrichtung und einer mit den Meßfühlern (36, 42) der Zeiterfassungseinrichung und dem Wärmeerzeuger (10) verbundenen Datentverarbeitungseinrichtung (12) zum Steuern eines Verfahrens nach einem der vorhergehenden Ansprüche.

10. Raumheizungsanlage nach Anspruch 9, deren Wärmeübertragungsmedium eine Vorlauftemperatur ($T_v$) und eine Rücklauftemperatur ($T_R$) besitzt, dadurch gekennzeichnet, daß die Differenz zwischen der Vorlauf- und der Rücklauftemperatur weniger als 20 Kelvin und vorzugsweise zwischen 1 und 6 Kelvin beträgt.

11. Raumheizungsanlage nach Anspruch 10, dadurch gekennzeichnet, daß der Leitungskreislauf (18) eine zwischen seinem Vor- und seinem Rücklaufzweig (16, 22) angeordnete Bypass-Leitung (28) aufweist, die an dem Wärmeerzeuger (10) vorbeiführt, sowie ein Umschaltventil (30), das in einer Stellung einen Kreislauf für das Wärmeübertragungsmedium freigibt, der so mit dem Wärmeerzeuger gekoppelt ist, daß das Wärmeübertragungsmedium mittels des Wärmeerzeugers (10) erwärmbar ist, und daß in einer zweiten Stellung einen Kreislauf freigibt, der an dem Wärmeerzeuger (10) vorbei durch die Bypass-Leitung (28) führt.

12. Datenverarbeitungseinrichtung (12) für eine Raumheizungsanlage zum Ausführen des Verfahrens nach einem der Ansprüche 1 bis 18.

EP 0 916 903 A2

Fig. 1

EP 0 916 903 A2

| Aussentemp. $T_a$ | | Systemtemp. $T_S$ | |
|---|---|---|---|
| Einschalttemp. = 20 °C + (20 °C - Aussentemp.) $\quad T_E = T_{\mp} + (T_{\mp} - T_a)$ ||||
| gemessenen Systemtemp. < Einschalttemp. $\quad T_S < T_E$ ? ||||
| nein | ja ||| 
| Brenner aus | wurde Brenner in den letzten 30 min gestartet $\quad t_A < 30\,min$ ? |||
| | nein | ja ||
| | Brennerlaufzeit = $t_E$ = (20 °C - Aussentemp.) x fa | Brennerlaufzeit = $t_E$ = (20 °C - Aussentemp.) x fa  fa = fa + 1sek (Selbstlernmodus) ||
| | Brennerstart | Brennerstart ||

Fig. 2

Fig. 3a

Regelung mit 15 sek/K          Gesamtbrennzeit : 1037 sek

Fig. 3b

EP 0 916 903 A2

13

Fig. 3c

Fig. 3d

Fig. 3e

EP 0 916 903 A2

Fig. 4

**Brenner mit interner Herstellersteuerung**     **Gesamtbrennzeit : 1504 sek**

Fig. 5